# EUROPEAN PATENT APPLICATION

(11) **EP 4 848 708 A1**
(43) Date of publication of application: **02.12.2026**
(21) Application number: 26180901.6
(22) Date of filing: 26.05.2026
(51) Int. Cl.: H04N 9/31

(54) **PROJECTION DISPLAY APPARATUS**

(30) Priority: 26.05.2025 JP 2025087030
(71) Applicant: Seiko Epson Corporation, Tokyo 160-8801 (JP)
(72) Inventor: OSACHI, Yuki, Suwa-shi 392-8502 (JP); WAKABAYASHI, Shinichi, Suwa-shi 392-8502 (JP); HIRAKURA, Takao, Suwa-shi 392-8502 (JP); TAKAHASHI, Tatsuya, Suwa-shi 392-8502 (JP)
(74) Representative: Lewis Silkin LLP

(57) **Abstract**

A single frame period includes unit periods, a control circuit supplies a data signal based on video data to a panel pixel for each of the unit periods, controls an optical path shifting element to set a position of a projection pixel to be nonstop in the single frame period, a trajectory drawn by a center of the projection pixel passes a position, with respect to an imaginary straight line connecting a first position corresponding to a video pixel represented by the panel pixel in the first unit period and a second position that is separated by one or more panel pixels along a U direction, the U direction and a V direction intersecting an X direction and a Y direction in which the panel pixels are arranged and corresponding to a video pixel represented by the panel pixel in a second unit period, located in the V direction.

## Description

The present application is based on, and claims priority from JP Application Serial Number 2025-087030, filed May 26, 2025, the disclosure of which is hereby incorporated by reference herein in its entirety.

### BACKGROUND

### 1. Technical Field

The present disclosure relates to a projection display apparatus.

### 2. Related Art

In a projection display apparatus that projects an image light created by a liquid crystal panel or the like onto a screen or the like, a technique of virtually enhancing resolution by an optical path shifting element is known. Specifically, in the projection display apparatus, a single frame period is divided into a plurality of unit periods, the projection position of one panel pixel in the liquid crystal panel is shifted for each unit period, and gradation levels designated by pixel data of video pixels constituting video data are individually represented in each unit period (for example, see JP-A-2021-139968).

JP-A-2021-139968 is an example of the related art.

However, in the technique described above, there is a problem that display unevenness caused by the shift of the projection position is visually recognized in the single frame period, and the display quality is deteriorated.

### SUMMARY

A projection display apparatus according to an aspect of the present disclosure includes a liquid crystal panel having a panel pixel to be an optical state according to a data signal, light emitted from a light source being incident on the panel pixel, the panel pixel emitting light according to the optical state, an optical path shifting element that shifts an optical path of the light emitted from the panel pixel and shifts a position of a projection pixel on which the emitted light from the panel pixel is projected, and a control circuit that controls the liquid crystal panel and the optical path shifting element, wherein a single frame period includes k unit periods of a first unit period to a k-th unit period, k being an integer of 2 or more, the control circuit supplies the panel pixel with the data signal based on a gradation level designated by pixel data of a video pixel constituting video data for each of the unit periods, the control circuit controls the optical path shifting element to set the position of the projection pixel to be nonstop in the single frame period, and a center of the projection pixel passes an intermediate point, with respect to an imaginary straight line connecting a first position corresponding to a video pixel represented by the panel pixel in the first unit period and a second position that is separated by one or more panel pixels along one of a third direction and a fourth direction intersecting a first direction and a second direction in which the panel pixels are arranged and corresponding to a video pixel represented by the panel pixel in a second unit period, located in another direction of the third direction and the fourth direction.

### BRIEF DESCRIPTION OF THE DRAWINGS

FIG. 1 shows a projection display apparatus according to a first embodiment.
FIG. 2 is a block diagram showing a configuration of the projection display apparatus.
FIG. 3 is a block diagram showing a configuration of a liquid crystal panel in the projection display apparatus.
FIG. 4 shows a configuration of a pixel circuit in the liquid crystal panel.
FIG. 5 shows a relationship between a single frame period and unit periods in the projection display apparatus.
FIG. 6 shows a relationship between an arrangement of video pixels and an arrangement of panel pixels in the projection display apparatus.
FIG. 7 shows an outline of a path of a projection position by the optical path shifting element of the projection display apparatus.
FIG. 8 shows details of the path.
FIG. 9 shows a relationship between writing to the liquid crystal panel and the path of the projection positions.
FIG. 10 shows details of a path of a projection position by an optical path shifting element of a projection display apparatus according to a second embodiment.
FIG. 11 shows an example of panel pixels projected in the projection display apparatus in practice.
FIG. 12 shows a path of a projection position according to a first comparative example.
FIG. 13 shows a path of a projection position according to a second comparative example.

### DESCRIPTION OF EMBODIMENTS

A projection display apparatus according to an embodiment will hereinafter be described with reference to the drawings. Note that, in the drawings, dimensions and scales of the respective parts are appropriately made different from real ones. The following embodiments are preferable specific examples of the present disclosure and therefore various technically preferable limitations are imposed thereon, however, the scope of the present disclosure is not limited to the embodiments unless there is a description that the present disclosure is limited thereto in particular in the following description.

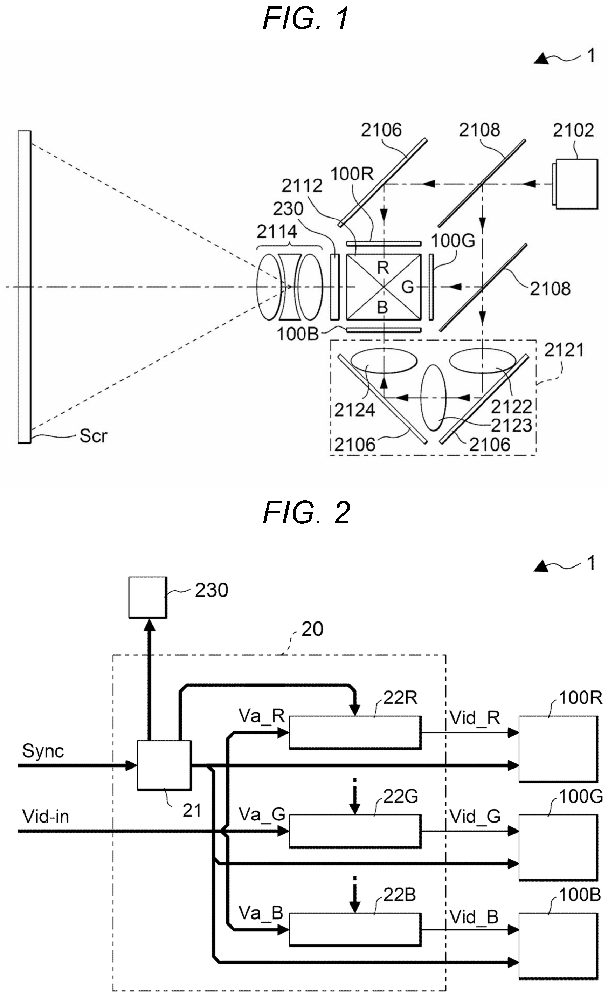

FIG. 1 shows an optical configuration of a projection display apparatus 1 according to a first embodiment. As shown in the drawing, the projection display apparatus 1 includes liquid crystal panels 100R, 100G, and 100B. Inside the projection display apparatus 1, a lamp unit 2102, three mirrors 2106, and two dichroic mirrors 2108 are provided.

The lamp unit 2102 emits white light by a light source such as an LED or a laser.

The white light emitted from the lamp unit 2102 is separated into three primary colors of red (R), green (G), and blue (B) by the two dichroic mirrors 2108.

Among these, an R light is incident on the liquid crystal panel 100R, a G light is incident on the liquid crystal panel 100G, and a B light is incident on the liquid crystal panel 100B, respectively.

Note that, since the B optical path is longer than the R optical path and the G optical path, it is necessary to prevent loss in the B optical path. Therefore, a relay lens system 2121 including an incident lens 2122, a relay lens 2123, and an exit lens 2124 is provided in the B optical path.

The liquid crystal panel 100R includes a plurality of pixel circuits as described later. Each of the plurality of pixel circuits includes a liquid crystal element. The liquid crystal element of the liquid crystal panel 100R is driven based on the data signal corresponding to R, thereby setting transmittance which is an optical state corresponding to the voltage of the data signal.

Accordingly, by individually controlling the transmittance of the liquid crystal element based on the data signal corresponding to R, the liquid crystal panel 100R generates an R transmission image. Similarly, the liquid crystal panel 100G generates a G transmission image based on the data signal corresponding to G, and the liquid crystal panel 100B generates a B transmission image based on the data signal corresponding to B.

The transmission images of the respective colors respectively generated by the liquid crystal panels 100R, 100G, and 100B are incident on a dichroic prism 2112 from three directions. In the dichroic prism 2112, the R light and the B light are refracted by 90 degrees, while the G light travels straight. Accordingly, the dichroic prism 2112 combines the images of the respective colors. The combined image by the dichroic prism 2112 enters a projection lens 2114 via an optical path shifting element 230.

The projection lens 2114 enlarges and projects the combined image via the optical path shifting element 230 onto a screen Scr.

The optical path shifting element 230 shifts the optical path of the combined image emitted from the dichroic prism 2112. The optical path shifting element 230 can arbitrarily shift the combined image projected on the screen Scr in the two-dimensional direction of the projection surface.

In the present embodiment, the details of the optical path shifted by the optical path shifting element 230 will be described later.

The transmission images by the liquid crystal panels 100R, 100B are reflected by the dichroic prism 2112 and projected, while the transmission image by the liquid crystal panel 100G travels straight and is projected. Therefore, the transmission images by the liquid crystal panels 100R, 100B have a horizontally-flipped relationship with respect to the transmission image of the liquid crystal panel 100G.

FIG. 2 is a block diagram showing an electrical configuration of the projection display apparatus 1. As illustrated in the drawing, the projection display apparatus 1 includes a display control circuit 20, the liquid crystal panels 100R, 100G, and 100B, and the optical path shifting element 230.

Video data Vid-in is supplied from a higher-level device (not illustrated) such as a host device in synchronization with a synchronization signal Sync. The video data Vid-in includes pixel data of video pixels, and the pixel data designates the gradation levels of the video pixels by, for example, 8 bits for each of RGB.

Note that the video pixels and the pixel data may be described without particular distinction. Furthermore, pixels of an image before combination or after combination by the liquid crystal panel 100R, 100G, or 100B are referred to as panel pixels. The panel pixel shifted by the optical path shifting element 230 and projected on the screen Scr is referred to as a projection pixel, and a position where the projection pixel is projected is referred to as a projection position.

In the liquid crystal panels 100R, 100G, and 100B, panel pixels are arranged in a matrix in plan view. In the embodiment, the arrangement of the video pixels designated by the video data Vid-in is, for example, twice in the longitudinal direction and twice in the lateral direction as compared with the arrangement of the panel pixels by the liquid crystal panel 100R, 100G, or 100B.

In the embodiment, a color image projected on the screen Scr is represented by combining the transmission images of the liquid crystal panels 100R, 100G, and 100B. Therefore, the minimum unit of the color image can be divided into a red subpixel by the liquid crystal panel 100R, a green subpixel by the liquid crystal panel 100G, and a blue subpixel by the liquid crystal panel 100B. However, when it is not necessary to specify the colors or when only lightness and darkness matter regarding the sub-pixels in the liquid crystal panels 100R, 100G, and 100B, the expression as subpixels is not necessary. In this description, the display units in the liquid crystal panels 100R, 100G, and 100B are also referred to as panel pixels.

The synchronization signal Sync includes a vertical synchronization signal for instructing to start vertical scanning of the video data Vid-in, a horizontal synchronization signal for instructing to start horizontal scanning, and a clock signal indicating a timing of one video pixel in the video data Vid-in.

The display control circuit 20 includes a processing circuit 21 and conversion circuits 22R, 22G, and 22B.

The processing circuit 21 controls the conversion circuits 22R, 22G, and 22B, the liquid crystal panels 100R, 100G, and 100B, and the optical path shifting element 230 for each of unit periods f-1 to f-4 described later based on the synchronization signal Sync. The optical path shifting element 230 shifts the projection position according to a control signal supplied from the processing circuit 21.

In the video data Vid-in supplied from the higher-level device, an R component is referred to as video data Va_R, a G component is referred to as video data Va_G, and a B component is referred to as video data Va_B.

The conversion circuit 22R temporarily accumulates the video data Va_R supplied from the higher-level device for one or two or more frame periods in an internal buffer, then reads video data corresponding to a unit period, converts the video data into a data signal Vid_R of an analog voltage, and supplies the data signal to the liquid crystal panel 100R.

The conversion circuits 22G and 22B are different from the conversion circuit 22R only in the color component of the video data to be converted, and the rest is common to the conversion circuit 22R. That is, the conversion circuit 22G converts the video data corresponding to the unit period into a data signal Vid_G of the analog voltage and supplies the data signal to the liquid crystal panel 100G regarding the video data Va_G, and the conversion circuit 22B converts the video data corresponding to the unit period into a data signal Vid_B of the analog voltage and supplies the data signal to the liquid crystal panel 100B regarding the video data Va_B.

Next, the liquid crystal panels 100R, 100G, and 100B will be described. The liquid crystal panels 100R, 100G, and 100B differ only in the color, that is, the wavelength of the incident light, and are substantially the same in structure. Therefore, the liquid crystal panels 100R, 100G, and 100B will be generally described with a reference sign 100 without specifying the color.

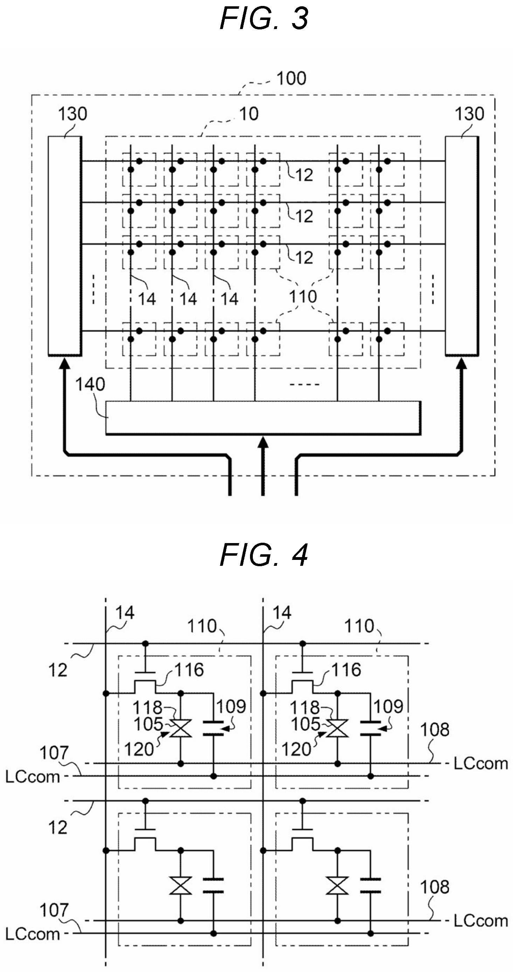

FIG. 3 is a block diagram showing an electrical configuration of the liquid crystal panel 100. In the liquid crystal panel 100, scanning line drive circuit 130 and a data line drive circuit 140 are disposed on a peripheral edge of a display region 10.

In the display region 10 of the liquid crystal panel 100, pixel circuits 110 are arranged in a matrix. Specifically, in the display region 10, a plurality of scanning lines 12 are disposed so as to extend in the lateral direction in the drawing, and a plurality of data lines 14 are disposed so as to extend in the longitudinal direction and to keep electrical insulation from the scanning lines 12. Furthermore, the pixel circuits 110 are provided in a matrix so as to correspond to the intersections between the plurality of scanning lines 12 and the plurality of data lines 14.

When the number of scanning lines 12 is m and the number of data lines 14 is n, the pixel circuits 110 are arranged in a matrix of longitudinal m rows and lateral n columns. Each of m, n is an integer of 2 or more. In the scanning lines 12 and the pixel circuits 110, in order to distinguish the rows of the matrix, the rows may be referred to as 1st, 2nd, 3rd, ..., (m-1)-th, and m-th rows in this order from the top in the drawing in some cases. Similarly, in the data lines 14 and the pixel circuits 110, in order to distinguish the columns of the matrix, the columns may be referred to as 1st, 2nd, 3rd, ..., (n-1)-th, and n-th columns in this order from the left in the drawing in some cases.

The scanning line drive circuit 130 selects the scanning lines 12 one by one in the order of, for example, the 1st, 2nd, 3rd, ..., and m-th rows under the control of the processing circuit 21, and sets the scanning signal to the scanning line 12 thus selected to an H level. Also, the scanning line drive circuit 130 sets the scanning signal to the scanning lines 12 other than the selected scanning line 12 to an L level.

The data line drive circuit 140 latches the data signal supplied from the circuit of the corresponding color of the conversion circuit 22R, 22G, or 22B for one row, and outputs the data signal to the pixel circuit 110 located on the scanning line 12 via the data line 14 in a period in which the scanning signal to the scanning line 12 is at the H level.

FIG. 4 shows equivalent circuits of a total of four pixel circuits 110 of longitudinal two rows and lateral two columns corresponding to the intersections between the two adjacent scanning lines 12 and the two adjacent data lines 14.

As illustrated in the drawing, the pixel circuit 110 includes a transistor 116 and a liquid crystal element 120. The transistor 116 is, for example, an n-channel thin film transistor. In the pixel circuit 110, the gate node of the transistor 116 is coupled to the scanning line 12, the source node thereof is coupled to the data line 14, and the drain node thereof is coupled to a pixel electrode 118 having a square planar shape in plan view.

A common electrode 108 is disposed common to all the pixels so as to face the pixel electrodes 118. A voltage LCcom is applied to the common electrode 108. Furthermore, as described above, liquid crystal 105 is sandwiched between the pixel electrode 118 and the common electrode 108. Therefore, the liquid crystal element 120 in which the liquid crystal 105 is sandwiched between the pixel electrode 118 and the common electrode 108 is configured for each pixel circuit 110.

In addition, a storage capacitor 109 is provided in parallel with the liquid crystal element 120. In the storage capacitor 109, one end is coupled to the pixel electrode 118, and the other end is coupled to a capacitance line 107. A temporally constant voltage, for example, the same voltage LCcom as the voltage applied to the common electrode 108 is applied to the capacitance line 107. Since the pixel circuits 110 are arranged in a matrix in the lateral direction which is the extension direction of the scanning lines 12 and the longitudinal direction which is the extension direction of the data lines 14, the pixel electrodes 118 contained in the pixel circuits 110 are also arranged in the longitudinal direction and the lateral direction.

In the scanning line 12 in which the scanning signal is at the H level, the transistor 116 of the pixel circuit 110 provided to correspond to the scanning line 12 is in an on-state. Since the data line 14 and the pixel electrode 118 are electrically coupled to each other due to the on-state of the transistor 116, the data signal supplied to the data line 14 reaches the pixel electrode 118 via the transistor 116 in the on-state. When the scanning line 12 is at the L level, the transistor 116 is in an off-state, however, the voltage of the data signal having reached the pixel electrode 118 is held by a capacitive property of the liquid crystal element 120 and the storage capacitor 109.

As is well known, in the liquid crystal element 120, alignment of liquid crystal molecules changes in accordance with an electric field generated by the pixel electrode 118 and the common electrode 108. Therefore, the liquid crystal element 120 is provided with transmittance according to the effective value of the applied voltage.

Note that a region functioning as a panel pixel in the liquid crystal element 120, that is, a region having transmittance corresponding to the effective value of the voltage is a region where the pixel electrode 118 and the common electrode 108 overlap each other in plan view. Since the pixel electrode 118 is square in plan view, the shape of the panel pixel of the liquid crystal panel 100 is also square. The plan view refers to a view from a direction perpendicular to the substrate surface of the liquid crystal panel 100 or the projection surface.

In addition, in order to efficiently transmit a large amount of light to an opening portion serving as the panel pixel, although not particularly illustrated, a microlens is provided for each panel pixel. Since the light repelled in a light shielding portion by the microlens is sent to the opening portion of the microlens, the use efficiency of the light is enhanced, but as described later, a phenomenon occurs in which the vicinity of the center of the panel pixel becomes brighter and the brightness decreases toward the periphery.

In the present embodiment, the liquid crystal 105 is of a vertical alignment (VA) type, and is in a normally black mode in which the transmittance is the lowest when the voltage applied to the liquid crystal element 120 is zero, and the transmittance increases as the applied voltage increases.

As described above, the arrangement of the video pixels designated by the video data Vid-in is twice in the longitudinal direction and twice in the lateral direction as compared with the arrangement of the panel pixels by the liquid crystal panel 100. Therefore, in the present embodiment, one panel pixel represents four video pixels in a single frame period while shifting the projection position, and the resolution is artificially enhanced.

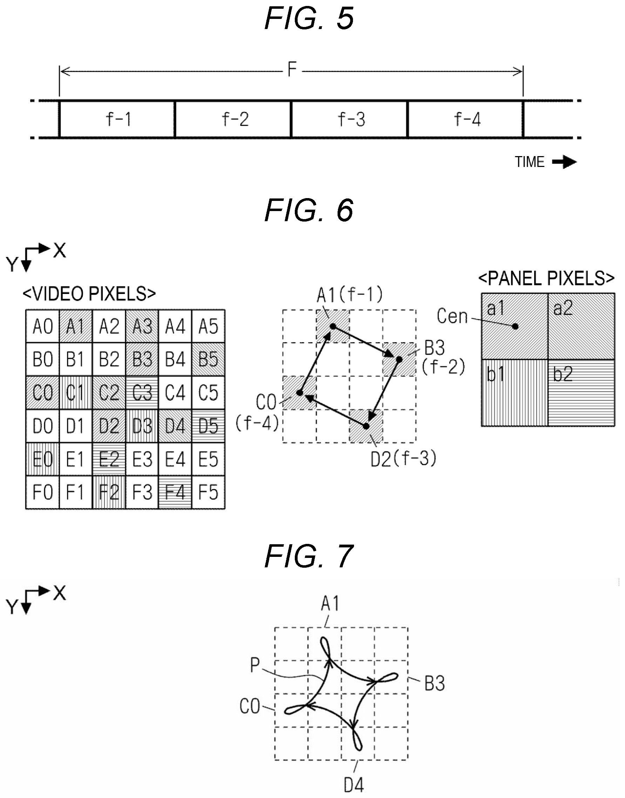

FIG. 5 shows a relationship between a frame period and unit periods in the projection display apparatus 1 according to the first embodiment. As shown in the drawing, in the present embodiment, a single frame period (F) is temporally divided into four unit periods. In order to distinguish the four unit periods, signs f-1, f-2, f-3, and f-4 are given in order of time for convenience.

The single frame period (F) is a period in which one frame of the image represented by the video data Vid-in from the higher-level device is supplied, and is 16.7 milliseconds per one cycle when the frequency of the vertical synchronization signal contained in the synchronization signal Sync is 60 Hz. In this case, the length of each unit period is 4.17 milliseconds, which is one fourth of the length of the single frame period.

FIG. 6 shows a relationship between video pixels represented by panel pixels in the unit periods f-1 to f-4. Specifically, in the drawing, the right part shows an arrangement of the panel pixels, and the left part with the middle part in between shows an arrangement of the video pixels.

The panel pixels shown in the right part are obtained by extracting two rows and two columns from the display region 10, and the video pixels shown in the left part are video pixels represented by the panel pixels of the two rows and two columns and video pixels surrounding the video pixels. Since the size of the panel pixel is longitudinally twice and laterally twice the size of the video pixel, the two video pixels in the longitudinal and lateral directions may be considered as one panel pixel.

In order to distinguish the panel pixels, signs a1, a2, b1, and b2 are given. For convenience, the black circle provided for the panel pixel a1 is a center Cen of the panel pixel a1, and more specifically, is an intersection of diagonal lines in the panel pixel a1.

Similarly, signs A0 to A5, B0 to B5, C0 to C5, D0 to D5, E0 to E5, and F0 to F5 are given to the video pixels.

The middle part of FIG. 6 shows a transition of video pixels represented by the panel pixel a1 in the unit periods f-1 to f-4.

The panel pixel "representing" a certain video pixel means that the liquid crystal element 120 of the panel pixel has transmittance corresponding to a gradation level designated by the video pixel (pixel data).

As shown in the left part and the middle part, the panel pixel a1 represents the video pixels A1, B3, D2, and C0 in order in the unit periods f-1 to f-4. Here, the video pixel B3 represented by the panel pixel a1 in the unit period f-2 is located at a point separated from the video pixel A1 by two video pixels in the X direction and by one video pixel in the Y direction. Two video pixels in the X or Y direction correspond to one panel pixel. Therefore, it can be rephrased that the video pixel B3 is located at a point separated from the video pixel A1 by one panel pixel in the X direction and by 0.5 panel pixel in the Y direction.

The video pixel D2 represented by the panel pixel a1 in the unit period f-3 is located at a point separated from the video pixel B3 by one video pixel in the opposite direction to the X direction and by two video pixels in the Y direction. In other words, the video pixel D2 is located at a point separated from the video pixel B3 by 0.5 panel pixel in the opposite direction to the X direction and by one panel pixel in the Y direction.

The video pixel C0 represented by the panel pixel a1 in the unit period f-4 is located at a point separated from the video pixel D2 by two video pixels in the opposite direction to the X direction and by one video pixel in the opposite direction to the Y direction. In other words, the video pixel C0 is located at a point separated from the video pixel D2 by one panel pixel in the opposite direction to the X direction and by 0.5 panel pixel in the opposite direction to the Y direction.

The video pixel A1 represented by the panel pixel a1 in the unit period f-1 is located at a point separated from the video pixel C0 by one video pixel in the X direction and by two video pixels in the opposite direction to the Y direction. In other words, the video pixel A1 is located at a point separated from the video pixel C0 by 0.5 panel pixel in the X direction and by one panel pixel in the Y direction.

Note that FIG. 6 shows the relationship among the video pixels represented by the panel pixels in the unit periods f-1 to f-4, but does not show a path of the projection position by the optical path shifting element 230. Next, a path of the projection position by the optical path shifting element 230 will be described.

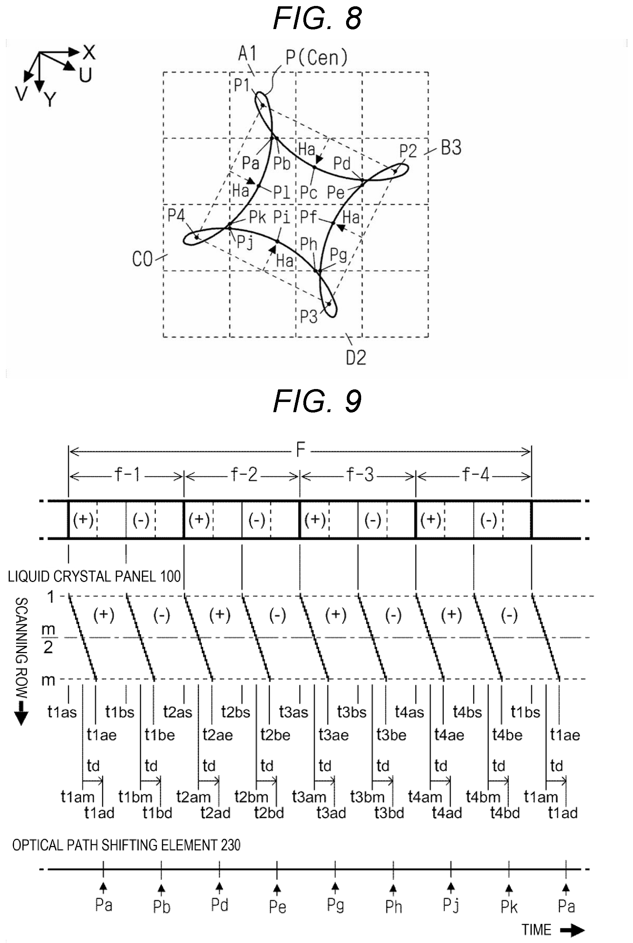

FIG. 7 is a schematic diagram showing a path of the projection position by the optical path shifting element 230, and FIG. 8 is an enlarged view showing the path in detail. The optical path shifting element 230 shifts the projection position of the entire combined image by the panel pixels in the display region 10. The path of the projection position will be described using the projection position of the panel pixel a1 as a representative.

In these drawings, broken lines indicate boundaries of the video pixels, and paths of the projection positions are indicated by solid lines. Specifically, the trajectory drawn by the center Cen of the panel pixel a1 in the single frame period (F) is indicated by a solid line.

A position P1 indicates the center of the video pixel A1 represented by the panel pixel a1 in the unit period f-1. Similarly, positions P2 to P4 indicate the centers of the video pixels B3, D2, and C0 represented by the panel pixel a1 in the order of the unit periods f-2 to f-4.

In FIG. 8, a U direction is a direction from the position P1 toward the position P2, and a V direction is a direction from the position P2 toward the position P3. The distance along the U direction from the position P1 to the position P2 is 1.12 (= √{1² + (0.5)²}) pixels in terms of the panel pixel.

In the single frame period (F), a trajectory P drawn by the center Cen of the panel pixel a1 sequentially passes positions Pa, Pb, Pc, Pd, Pe, Pf, Pg, Ph, Pi, Pj, Pk, and PI and returns to the position Pa. That is, the trajectory P is closed in a path having the single frame period (F) as a cycle.

In the present embodiment, the center Cen of the panel pixel a1 passes through the same point in view of the single frame period (F). In other words, the trajectory P drawn by the center Cen has overlaps and the trajectory P has intersections.

In the present embodiment, the center Cen constantly moves, that is, is nonstop in the single frame period (F).

The center Cen rotates along the peripheries of the positions P1, P2, P3, and P4 without passing through the positions P1, P2, P3, and P4.

The center Cen passes through the position Pc when moving from the peripheral edge of the position P1 toward the peripheral edge of the position P2. The position Pc is a point separated from an imaginary straight line connecting the position P1 and the position P2 by a distance Ha in the V direction. The center Cen passes through the position Pf when moving from the peripheral edge of the position P2 toward the peripheral edge of the position P3. The position Pf is a point separated from an imaginary straight line connecting the position P2 and the position P3 by the distance Ha in an opposite direction to the U direction. The center Cen passes through the position Pi when moving from the peripheral edge of the position P3 toward the peripheral edge of the position P4. The position Pi is a point separated from an imaginary straight line connecting the position P3 and the position P4 by the distance Ha in an opposite direction to the V direction. The center Cen passes through the position PI when moving from the peripheral edge of the position P4 toward the peripheral edge of the position P1. The position PI is a point separated from an imaginary straight line connecting the position P4 and the position P1 by the distance Ha in the U direction.

In short, in the single frame period (F), the center Cen of the panel pixel a1 moves on the peripheral edges of the positions P1, P2, P3, and P4 while moving in a path curved toward the center of a square having the positions P1, P2, P3, and P4 as vertices.

The position Pa is a point where the center Cen enters a region corresponding to the video pixel A1 among the positions where the boundary corresponding to the video pixel A1 represented by the panel pixel a1 and the trajectory P overlap each other. The position Pb is a point where the center Cen exits the region corresponding to the video pixel A1 among the positions where the boundary corresponding to the video pixel A1 and the trajectory P overlap each other.

The position Pd is a point where the center Cen enters a region corresponding to the video pixel B3 among the positions where the boundary corresponding to the video pixel B3 and the trajectory P overlap each other. The position Pe is a point where the center Cen exits the region corresponding to the video pixel B3 among the positions where the boundary corresponding to the video pixel B3 and the trajectory P overlap each other. The position Pg is a point where the center Cen enters a region corresponding to the video pixel D2 among the positions where the boundary corresponding to the video pixel D2 and the trajectory P overlap each other. The position Ph is a point where the center Cen exits the region corresponding to the video pixel D2 among the positions where the boundary corresponding to the video pixel D2 and the trajectory P overlap each other. The position Pj is a point where the center Cen enters a region corresponding to the video pixel C0 among the positions where the boundary corresponding to the video pixel C0 and the trajectory P overlap each other. The position Pk is a point where the center Cen exits the region corresponding to the video pixel C0 among positions where the boundary corresponding to the video pixel D2 and the trajectory P overlap each other.

FIG. 9 shows timings when the center Cen of the panel pixel a1 passes in the single frame period (F) in the projection display apparatus 1.

As described above, the single frame period (F) is divided into the four unit periods f-1 to f-4. Furthermore, the unit periods f-1 to f-4 are each divided into a first half period and a second half period.

The first half period is a period in which a positive data signal is written to the liquid crystal panel 100, and the second half period is a period in which a negative data signal is written to the liquid crystal panel 100.

The writing period of the data signal refers to a period for applying the data signal, that is, a period for writing to the pixel electrode 118 of the liquid crystal element 120 via the data line 14. The positive data signal refers to a data signal having a voltage equal to or higher than the voltage LCcom applied to the common electrode 108, and the negative data signal refers to a data signal having a voltage equal to or lower than the voltage LCcom.

When the liquid crystal panel 100 is in the normally black mode, the transmittance of the liquid crystal element 120 increases as the difference between the voltage LCcom of the common electrode 108 and the voltage of the data signal applied to the pixel electrode 118 increases.

Although the reference voltage of the polarity is the voltage LCcom of the common electrode 108, a voltage slightly higher than the voltage LCcom may be used as a reference in consideration of feedthrough generated in the N-channel type transistor.

In the drawing, the vertical axis indicates the first row to the m-th row of the scanning lines 12 of the liquid crystal panel 100, and the temporal transition of the selected scanning line 12 is shown. When the selection of the scanning line 12 is indicated by a black short thick line, the scanning line 12 is exclusively selected row by row, and the selected scanning line 12 shifts from the first row to the m-th row as time elapses. This transition is expressed as a series of black short thick lines indicating the selection of the scanning line 12, that is, inclined lines in a diagonally downward right direction.

In the first half period of the unit period f-1, the timing at which the first scanning line 12 in the first row is selected is t1as, and the timing at which the last scanning line 12 in the m-th row is selected is t1ae. In addition, in the first half period, the timing at which the scanning lines 12 in the (m/2)-th row, that is, the scanning lines 12 located in half of the first to m-th rows are selected is t1am. In the second half period of the unit period f-1, the timing at which the scanning line 12 in the first row is selected is t1bs, the timing at which the scanning line 12 in the m-th row is selected is t1be, and the timing at which the scanning line 12 in the (m/2)-th row is selected is t1bm.

Similarly, in the first half period and the second half period of the unit period f-2, the timings at which the scanning line 12 in the first row is selected are t2as and t2bs, the timings at which the scanning line 12 of the m-th row is selected are t2ae and t2be, and the timings at which the scanning line 12 in the (m/2)-th row is selected are t2am and t2bm. In the first half period and the second half period of the unit period f-3, the timings at which the scanning line 12 in the first row is selected are t3as and t3bs, the timings at which the scanning line 12 in the m-th row is selected are t3ae and t3be, and the timings at which the scanning line 12 in the (m/2)-th row is selected are t3am and t3bm. In the first half period and the second half period of the unit period f-4, the timings at which the scanning line 12 in the first row is selected are t4as and t4bs, the timings at which the scanning line 12 in the m-th row is selected are t4ae and t4be, and the timings at which the scanning line 12 in the (m/2)-th row is selected are t4am and t4bm.

The timing t1ad is a timing delayed from the timing t1am by a time td, and the timing t1bd is a timing delayed from the timing t1bm by the time td.

The time td is a delay time from when the voltage of the data signal is applied to the pixel electrode 118 to when the transmittance according to the voltage is reached in the liquid crystal element 120 of the liquid crystal panel 100. In practice, the time td may be different between the case where the transmittance of the liquid crystal element 120 is higher (lighter) and the case where the transmittance is lower (darker), but the time td is treated as the same in order to simplify the description.

The timing t2ad is a timing delayed from the timing t2am by the time td, and the timing t2bd is a timing delayed from the timing t2bm by the time td. The timing t3ad is a timing delayed from the timing t3am by the time td, and the timing t3bd is a timing delayed from the timing t3bm by the time td. The timing t4ad is a timing delayed from the timing t4am by the time td, and the timing t4bd is a timing delayed from the timing t4bm by the time td.

In the display region 10, the panel pixel corresponding to the scanning line 12 in the (m/2)-th row has the transmittance designated by the video pixel (gradation level) in the unit period f-1 in the period from the timing t1ad to the timing t2am. Similarly, the panel pixel corresponding to the scanning line 12 in the (m/2)-th row has the transmittance designated by the video pixel of the unit period f-2 in the period from the timing t2ad to the timing t3am, has the transmittance designated by the video pixel of the unit period f-3 in the period from the timing t3ad to the timing t4am, and has the transmittance designated by the video pixel of the unit period f-4 in the period from the timing t4ad to the timing t1am.

For the panel pixel whose transmittance changes in this manner, the processing circuit 21 causes the optical path shifting element 230 to control the projection position such that the center Cen passes through the next position.

Specifically, the processing circuit 21 controls the projection position such that the center Cen passes through the position Pa at the timing t1ad, the position Pb at the timing t1bd, the position Pd at the timing t2ad, the position Pe at the timing t2bd, the position Pg at the timing t3ad, the position Ph at the timing t3bd, the position Pj at the timing t4ad, and the position Pk at the timing t4bd.

According to the projection display apparatus 1 of the present embodiment, for example, when the center Cen draws the trajectory P in the single frame period (F), the panel pixel a1 has at least the transmittance designated by the video pixel A1 from the position Pa to the position Pb.

When the center Cen draws the trajectory P, the panel pixel has at least the transmittance designated by the video pixel B3 from the position Pd to the position Pe, at least the transmittance designated by the video pixel D2 from the position Pg to the position Ph, and at least the transmittance designated by the video pixel C0 from the position Pj to the position Pk.

Therefore, since the panel pixel a1 represents the video pixels A1, B3, D2, and C0 in the corresponding regions in the corresponding unit periods, the resolution of the image visually recognized by the user can be artificially enhanced to four times.

Simply, the optical path shifting element 230 shifts the projection pixel by the actuator pivoting the birefringent plate provided on the emission surface side of the dichroic prism 2112 along two axes. When a configuration is adopted in which the optical path shifting element 230 is fixed (stop) at the position P1 and then shifted (go) to the position P2 in a partial period of the unit period f-1, not only a large amount of energy is required at the time of changing from stop to go and conversely, at the time of changing from go to stop, but also the projection position vibrates due to vibration caused by acceleration/deceleration or stop of the shift operation, which adversely affects the display quality.

In contrast, in the present embodiment, since the optical path shifting element 230 constantly shifts the projection pixel in the single frame period (F) without stopping, a large amount of energy is not required for the pivot of the birefringent plate, and the adverse effect on the display quality can be suppressed.

Furthermore, in the present embodiment, in the case of the panel pixel a1, the trajectory P drawn by the center Cen has intersections. If there is no intersection, for example, a sharp angle change or a small curvature is caused near the positions Pa and Pb, and it is necessary to greatly change the pivot of the birefringent plate. In the present embodiment, the sharp angle change or the small curve change can be alleviated by the intersections of the trajectory P.

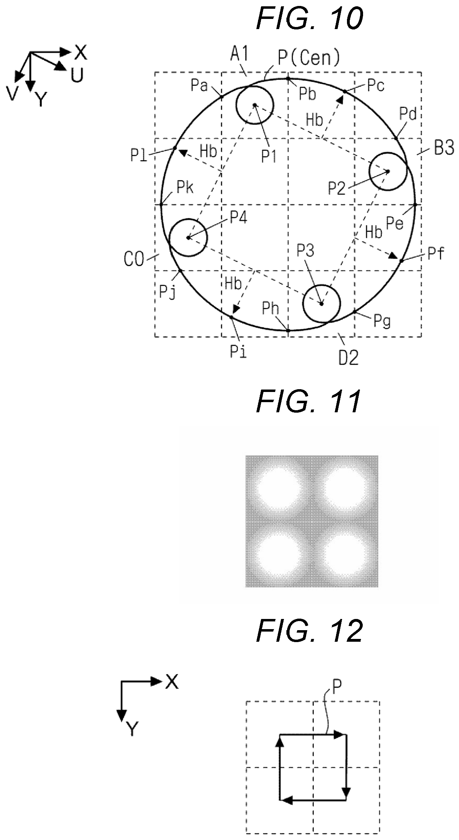

In the projection pixel, the luminance is not uniform due to light collection by the microlens, and in practice, as shown in FIG. 11, the luminance tends to decrease from the center toward the outside. Accordingly, when the shift amount of the projection pixel is smaller, display unevenness is likely to occur due to uneven distribution of portions with more overlaps and portions with fewer overlaps between the projection positions by the shift.

For example, as in the first comparative example illustrated in FIG. 12, when the shift amount of the projection pixel for each unit period is one video pixel and 0.5 panel pixel, display unevenness is likely to occur.

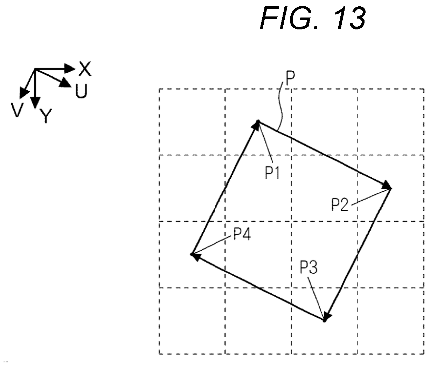

As in a second comparative example illustrated in FIG. 13, when the shift amount of the projection pixel for each unit period is increased as compared with the first comparative example, the display unevenness due to the uneven distribution tends to be eliminated.

However, when the shift of the projection pixel linearly changes as in the second comparative example, the light portion and the dark portion are extended by the shift and lightness and darkness are emphasized, and thus a different type of display unevenness from the display unevenness due to uneven distribution may occur.

In contrast, in the present embodiment, for example, the shift for representing from the video pixel A1 to the video pixel B3 is not linear in the U direction, but is curved via the position Pc deflected in the V direction. Accordingly, the emphasis of lightness and darkness due to the extension of the light portion and the dark portion is alleviated, and thus the different type of display unevenness can be reduced.

Next, a second embodiment will be described. The second embodiment has the same configuration as that of the first embodiment, but is different only in control of the optical path shifting element 230 by the processing circuit 21. The second embodiment will be described with emphasis on the control of the optical path shifting element 230.

FIG. 10 shows a detailed trajectory of a path of a projection position by the optical path shifting element 230 in the second embodiment.

In this drawing, the trajectory drawn by the center Cen is common to the trajectory of the first embodiment illustrated in FIG. 8 in that the trajectory passes through the peripheral edges of the positions P1, P2, P3, and P4.

However, in the second embodiment, the trajectory is different from the trajectory of the first embodiment in that, when tracing from the peripheral edge of a certain position to the next peripheral edge, the center traces a path curved in a direction opposite to the direction toward the center of the square having the positions P1, P2, P3, and P4 as vertices.

In the second embodiment, the position Pc is a point separated from an imaginary straight line connecting the position P1 and the position P2 by a distance Hb in an opposite direction to the V direction, and the position Pf is a point separated from an imaginary straight line connecting the position P2 and the position P3 by the distance Hb in the U direction. Similarly, in the second embodiment, the position Pi is a point separated from an imaginary straight line connecting the position P3 and the position P4 by the distance Hb in the V direction, and the position Pl is a point separated from the imaginary straight line connecting the position P4 and the position P1 by the distance Hb in the opposite direction to the U direction.

According to the projection display apparatus 1 of the second embodiment, for example, in the case of the panel pixel a1, since the video pixels A1, B3, D2, and C0 are represented in the corresponding regions in the corresponding unit periods as in the first embodiment, the resolution of the image visually recognized by the user can be artificially enhanced to four times.

Furthermore, in the second embodiment, similarly to the first embodiment, since the optical path shifting element 230 constantly shifts the projection pixel in the single frame period (F) and without stopping, a large amount of energy is not required for the pivot of the projection pixel, and the adverse effect on the display quality can be suppressed.

In the second embodiment, for example, the shift for representing from the video pixel A1 to the video pixel B3 is not linear in the U direction, but is curved via the position Pc deflected in the opposite direction to the V direction. Accordingly, the emphasis of lightness and darkness due to the extension of the light portion and the dark portion is alleviated, and thus the different type of display unevenness can be reduced.

In the first and second embodiments (hereinafter referred to as embodiments and the like), various modifications or applications can be made as follows.

In the embodiments and the like, the liquid crystal panel 100 is of the transmissive type, but may be of a reflective type.

Furthermore, in the embodiments and the like, the lamp unit 2102 is not controlled, but may be controlled. For example, in the case of the panel pixel a1, the processing circuit 21 may be configured to dim the light more when the center Cen is outside the region corresponding to the video pixels A1, B3, D2, and C0 than that when the center Cen is inside the region.

In the embodiments and the like, in the case of the panel pixel a1, the center Cen is specified to pass through the position shown in FIG. 9 at the timing shown in FIG. 9, but is not limited thereto. For example, although not particularly illustrated, the center Cen may pass through the position Pa at a timing delayed by the time td from the timing t1ae at which the m-th scanning line 12 is selected, pass through the position Pb at a timing delayed by the time td from the timing t1be, pass through the position Pd at a timing delayed by the time td from the timing t2ae, and pass through the position Pe at a timing delayed by the time td from the timing t2be. Similarly, the center Cen may pass through the position Pg at a timing delayed by the time td from the timing t3ae, pass through the position Ph at a timing delayed by the time td from the timing t3be, pass through the position Pj at a timing delayed by the time td from the timing t4ae, and pass through the position Pk at a timing delayed by the time td from the timing t4be.

In the embodiments and the like, in the case of the panel pixel a1, the center Cen makes one round around the positions P1, P2, P3, and P4, but may be configured such that the center Cen makes two or more rounds.

In the embodiments and the like, the single frame period is divided into the four unit periods. That is, although "4" has been described as an example of k, which is the number of unit periods contained in the single frame period, k is not limited to "4". Specifically, when the shift amount of the optical path from a certain unit period to the next unit period is 1.0 pixel or more in terms of the panel pixel, k may be "3" or an integer of "5" or more.

In the embodiments and the like, the lamp unit 2102 emits white light, and the two dichroic mirrors 2108 separate the white light into red (R), green (G), and blue (B) color lights. Not limited to the configuration, but three lamp units that individually emit a red light, a green light, and a blue light may be prepared, and the emitted red light, green light, and blue light may be sequentially incident on the liquid crystal panels 100R, 100G, and 100B.

For example, the following configurations are figured out from the configurations exemplified above.

A projection display apparatus according to a configuration 1 includes a liquid crystal panel having a panel pixel to be an optical state according to a data signal, light emitted from a light source being incident on the panel pixel, the panel pixel emitting light according to the optical state, an optical path shifting element that shifts an optical path of the light emitted from the panel pixel and shifts a position of a projection pixel on which the emitted light from the panel pixel is projected, and a control circuit that controls the liquid crystal panel and the optical path shifting element, wherein a single frame period includes k unit periods of a first unit period to a k-th unit period, k being an integer of 2 or more, the control circuit supplies the panel pixel with the data signal based on a gradation level designated by pixel data of a video pixel constituting video data for each of the unit periods, the control circuit controls the optical path shifting element to set the position of the projection pixel to be nonstop in the single frame period, and a center of the projection pixel passes an intermediate point, with respect to an imaginary straight line connecting a first position corresponding to a video pixel represented by the panel pixel in the first unit period and a second position that is separated by one or more panel pixels along one of a third direction and a fourth direction intersecting a first direction and a second direction in which the panel pixels are arranged and corresponding to a video pixel represented by the panel pixel in a second unit period, located in another direction of the third direction and the fourth direction.

According to the projection display apparatus of the configuration 1, it is possible to artificially enhance the resolution of the image visually recognized by the user and to reduce display unevenness.

The lamp unit 2102 is an example of the "light source", and the display control circuit 20 is an example of the "control circuit". The position P1 is an example of the "first position", the position P2 is an example of the "second position", and the position Pc is an example of the "intermediate point". The X direction is an example of the "first direction", the Y direction is an example of the "second direction", the U direction is an example of the "third direction", and the V direction is an example of the "fourth direction".

In a projection display apparatus according to a specific configuration 2 of the configuration 1, a trajectory drawn by the center of the projection pixel in the single frame period has an intersection. According to the projection display apparatus of the configuration 2, a sharp angle change of the trajectory is suppressed as compared with a case where the trajectory has no intersection.

In a projection display apparatus according to a specific configuration 3 of the configuration 1, the center of the projection pixel passes along peripheral edges of the first position and the second position.

According to the projection display apparatus of the configuration 3, the panel pixel can represent the video pixel in the vicinity of the first position in the first unit period, and can represent the video pixel in the vicinity of the second position in the second unit period.

In a projection display apparatus according to another specific configuration 4 of the configuration 1, the other direction is an inward direction of a path of the projection pixel closed in the single frame period. According to the projection display apparatus of the configuration 4, it is possible to suppress display unevenness as compared with a case where the center linearly moves from the first position toward the second position.

In a projection display apparatus according to another specific configuration 5 of the configuration 1, the other direction is an outward direction of a path of the projection pixel closed in the single frame period. According to the projection display apparatus of the configuration 5, it is possible to suppress display unevenness as compared with a case where the center linearly moves from the first position toward the second position.

## Claims

1. A projection display apparatus comprising:
a liquid crystal panel having a panel pixel to be an optical state according to a data signal, light emitted from a light source being incident on the panel pixel, the panel pixel emitting light according to the optical state;
an optical path shifting element that shifts an optical path of the light emitted from the panel pixel and shifts a position of a projection pixel on which the emitted light from the panel pixel is projected; and
a control circuit that controls the liquid crystal panel and the optical path shifting element, wherein
a single frame period includes k unit periods of a first unit period to a k-th unit period, k being an integer of 2 or more,
the control circuit supplies the panel pixel with the data signal based on a gradation level designated by pixel data of a video pixel constituting video data for each of the unit periods,
the control circuit controls the optical path shifting element to set the position of the projection pixel to be nonstop in the single frame period, and
a center of the projection pixel passes an intermediate point, with respect to an imaginary straight line connecting a first position corresponding to a video pixel represented by the panel pixel in the first unit period and a second position that is separated by one or more panel pixels along one of a third direction and a fourth direction intersecting a first direction and a second direction in which the panel pixels are arranged and corresponding to a video pixel represented by the panel pixel in a second unit period, located in another direction of the third direction and the fourth direction.

2. The projection display apparatus according to claim 1, wherein
a trajectory drawn by the center of the projection pixel in the single frame period has an intersection.

3. The projection display apparatus according to claim 1, wherein
the center of the projection pixel passes along peripheral edges of the first position and the second position.

4. The projection display apparatus according to claim 1, wherein
the other direction is an inward direction of a path of the projection pixel closed in the single frame period.

5. The projection display apparatus according to claim 1, wherein
the other direction is an outward direction of a path of the projection pixel closed in the single frame period.
